# EUROPÄISCHE PATENTANMELDUNG

(11) **EP 0 890 389 A1**
(43) Veröffentlichungstag der Anmeldung: **13.01.1999**
(21) Anmeldenummer: 97122767.3
(22) Anmeldetag: 23.12.1997
(51) Int. Cl.: B01D 53/94, F01N 3/08

(54) **Feststoff zur Speicherung und katalytischen Entfernung von Stickstoffoxiden**

(30) Priorität: 10.07.1997 DE 19729517
(71) Anmelder: DORNIER GmbH, 88039 Friedrichshafen (DE)
(72) Erfinder: Andorf, Renato, Dr.rer.nat., 88074 Meckenbeuren (DE); Plog, Carsten, Dr.rer.nat., 88677 Markdorf (DE); Schäffner, Guido, Dr.rer.nat., 88263 Horgenzell (DE)
(74) Vertreter: Meel, Thomas

(57) **Zusammenfassung**

Die Erfindung betrifft die Verwendung eines Ag-haltigen Feststoffs zur Speicherung/Freisetzung von Stickoxiden in Gasen, wobei die Stickoxide bei λ-Werten des Gases > 1 in dem Ag-haltigen Feststoff gespeichert werden und die Stickoxide bei λ-Werten des Gases ≤ 1 an dem Ag-haltigen Feststoff freigesetzt werden.

## Beschreibung

Die Erfindung betrifft einen Feststoff zur Speicherung/Freisetzung von Stickoxiden (NOx) sowie einen Stickoxid-Speicherkatalysator.

Weltweit beschäftigen sich zahlreiche Arbeitsgruppen mit der Entwicklung von Katalysatoren zur Entstickung magerottomotorischer Abgase. Eine Entwicklungsrichtung, die derzeit intensiv verfolgt wird, liegt in den sogenannten NOx-Speicher-Katalysatoren/1,2/, die im Abgas magermix-betriebener Ottomotoren eingesetzt werden sollen. Die Stickoxide werden dabei im Magerbetrieb des Motors gespeichert und in fetten oder stöchiometrischen Betriebsphasen wieder freigesetzt und gleichzeitig an einem konventionellen Dreiwegekatalysator zu N₂ umgesetzt. Der NOx-Speicherkatalysator setzt sich entsprechend aus zwei Materialkomponenten, der NOx-Speicherkomponente und einem Feststoff mit katalytischer Aktivität zur Entstickung (z.B. Dreiwegekatalysator), zusammen. Das NOx-Speichermaterial speichert die Stickoxide dabei als Nitrate. Als Feststoffkomponenten werden dazu Alkali- und Erdalkaliverbindungen eingesetzt.

Ein entscheidendes Problem, das den Serieneinsatz des NOx-Speicher-Katalysators derzeit nicht ermöglicht, ist die unzureichende Resistenz des NOx-Speichermaterials gegen schwefelhaltige Komponenten im Abgas und gegen hohe Temperaturen. Ein weiteres Problem besteht darin, daß dieser Katalysatortyp aufgrund der für die Nitratspeicherung erforderlichen Oxidation des NOx zu NO₂ erst oberhalb einer bestimmten Temperatur (ca. 200°C) einsetzbar ist. Im gesetzlich vorgeschriebenen Fahrtestzyklus kann daher der Niedertemperaturbereich (in Europa: Kaltstart und ECE) nicht abgedeckt werden.

In der Fachliteratur ist Ag auf zeolithischem Träger des Typs MFI als NOx-adsorptiv wirkender Feststoff beschrieben/3, 4/.

Aufgabe der Erfindung ist es, ein NOx-Speichermaterial, anzugeben, das für den Einsatz in einem NOx-Speicher-Katalysator geeignet ist, und eine ausreichende Resistenz gegen schwefelhaltige Komponenten im Abgas aufweist.

Diese Aufgabe wird mit dem Gegenstand des Anspruchs 1 gelöst. Vorteilhafte Ausbildungen der Erfindung sowie ein NOx-Speicherkatalysator sind Gegenstand weiterer Ansprüche.

Der erfindungsgemäß eingesetzte Ag-haltige Feststoff kann durch gezielte Veränderung des λ-Wertes (=Verhältnis der oxidierend zu reduzierend wirkenden Gaskomponenten) der über dem Feststoff befindlichen Gasatmosphäre mit Stickoxiden beladen (u.a. Adsorption) oder entladen (u.a. Desorption) werden. Dabei erfolgt bei λ-Werten größer als eins die Speicherung der Stickoxide, bei Werten gleich oder kleiner als eins die Freisetzung der Stickoxide.

Der erfindungsgemäß eingesetzte Feststoff, der als Ag-haltige Verbindungen z.B. elementares Ag, AgO₂, Ag₂O, Ag₂CO₃ oder AgOH enthalten kann, kann optional zusätzlich eines oder mehrere Edelmetalle (z.B. Pt, Pd, Rh, Ir, Au, Ru, Os) enthalten. Die Ag- und edelmetallhaltigen Verbindungen können vorteilhaft auf mikroporösen Trägersubstanzen, z.B. Al₂O₃, CeO₂, La-haltiges CeO₂, ZrO₂, La-haltiges ZrO₂, SiO₂, TiO₂, Mg-Al-Mischoxid, Si-Al-Mischoxid, Zeolithe oder ein Gemisch aus mehreren der genannten Verbindungen aufgebracht werden. Die BET-Oberfläche der Trägersubstanz liegt dabei insbesondere zwischen 10 und 1000 m²/g.

Der erfindungsgemäß eingesetzte Ag-haltige Feststoff eignet sich insbesondere zur Reduktion von Stickoxiden im Abgas von magerbetriebenen Ottomotoren und Dieselmotoren.

Aufgrund der beschriebenen Abhängigkeit des Speicher/Freisetzungs-Verhaltens vom λ-Wert des NOx-haltigen Gases kann der Ag-haltige Feststoff in idealer Weise als NOx-Speicherkomponente in einem NOx-Speicherkatalysator eingesetzt werden. Zusammen mit einem weiteren Feststoff mit katalytischer Aktivität zur Entstickung (im folgenden: Katalysatorkomponente genannt) kann damit die Entstickung O₂-reicher Gase erreicht werden. Bei der Katalysatorkomponente kann es sich insbesondere um eine solche mit Dreiwegefunktion handeln.

Durch den erfindungsgemäßen NOx-speichernden Feststoff als Komponente eines NOx-Speicherkatalysators kann ein Beitrag zur Erfüllung zukünftiger Abgasgrenzwerte geleistet werden. Er zeichnet sich insbesondere durch seine Resistenz gegen Schwefel aus.

Eine weitere sehr vorteilhafte Eigenschaft des erfindungsgemäß eingesetzten Ag-haltigen Feststoffs ist die Tatsache, daß er Stickoxide bereits bei sehr tiefen Temperaturen speichert. Mit dem Ag-haltigen Material ist eine NOx-Speicherung im Temperaturbereich unter 200°C möglich. Die Freisetzung des gespeicherten NOx kann anschließend bei Temperaturen über 200°C erfolgen.

Das pulverförmige Material (Katalysator- und NOx-Speicherkomponente auf mikroporöser Trägersubstanz) wird für die Anwendung in Fahrzeugen auf einen keramischen oder metallischen Wabenkörper (im folgenden: geometrischer Träger, zur Abgrenzung gegenüber der mikroporösen Trägersubstanz) beschichtet. Es kann für andere Anwendungen auch in davon unterschiedlicher Formgebung, z.B. als Pellets oder Extrudate, eingesetzt werden.

NOx-Speicher- und Katalysatorkomponente können dabei folgendermaßen kombiniert werden:
- Atomare Mischung
   NOx-Speicherkomponenten und Katalysatorkomponenten befinden sich nebeneinander auf einer mikroporösen Trägersubstanz, welche ihrerseits auf einem geometrischen Träger aufgebracht ist.
- Pulvermischung
   NOx-Speicherkomponenten und Katalysatorkomponenten befinden sich jeweils einzeln auf mikroporösen Trägersubstanzen, die als Pulvermischung auf einem geometrischen Träger aufgebracht sind.
- Schichtanordnung
   NOx-Speicherkomponenten und Katalysatorkomponenten befinden sich jeweils einzeln auf mikroporösen Trägersubstanzen, die in Schichten angeordnet auf einem geometrischen Träger aufgebracht sind.
- Strukturierte Anordnung
   NOx-Speicherkomponenten und Katalysatorkomponenten befinden sich jeweils einzeln auf mikroporösen Trägern, die jeweils getrennt voneinander auf unterschiedlichen geometrischen Trägern, z.B. in serieller Anordnung aufgebracht sind.

NOx-Speicherkomponente wie auch die Katalysatorkomponente können z.B. mittels der folgenden Verfahren auf die mikroporöse Trägersubstanz aufgebracht werden:
- Tränken,
- Sol-Gel-Verfahren,
- naßchemische Fällung, z.B. Hydroxidfällung,
- Ioneneintausch in einen Zeolith.

### Beispiele

### Ausführungsbeispiel A: Ag-haltige NOx-Speicherkomponente auf mikroporöser Trägersubstanz (Ag-Al₂O₃)

### Pulver A: Ag-haltige Verbindung auf mikroporöser Trägersubstanz

Zunächst werden 50 g Al₂O₃ (BET-Oberfläche: 210 m2/g) 12 h bei 125°C getrocknet. Zur Herstellung der AgNO₃-Tränklösung wird 50 bis 70 g AgNO₃ in 38 ml Wasser bei 80°C gelöst. Das trockene Al₂O₃-Pulver wird mit der AgNO₃-Lösung getränkt und anschließend 12 h bei 125° getrocknet. Abschließend erfolgt die Kalzinierung des Pulvers für 5 Stunden bei 650°C im Luftstrom.

### Beschichtung eines geometrischen Trägers (keramischer Wabenkörper)

Zur Herstellung der Beschichtungslösung wird eine 50 g Pulver A enthaltende wäßrige Suspension in einer Planetenkugelmühle gemahlen und anschliessend mit Wasser verdünnt. Wasserglas kann zusätzlich als Bindemittel zugesetzt werden, um die Haftung des Pulvers auf dem Wabenkörper zu verbessern. Die Feststoffkonzentration der Suspension beträgt ca. 100-300 g/l (je nach Bindemittelgehalt).

Zur Beschichtung des Keramikträgers wird dieser in die Suspension getaucht, anschließend die überschüssige Lösung mit Druckluft aus den Kanälen geblasen und dann im Trockenschrank getrocknet. Dieser Vorgang wird so lange wiederholt, bis die erwünschte Auftragsmasse erreicht ist. Abschließend erfolgt eine Kalzinierung bei 650°C im Luftstrom über 5 Stunden.

### Ausführungsbeispiel B: Ag- und edelmetallhaltige NOx-Speicherkomponente auf mikroporösen Trägersubstanzen (Ag-Al₂O₃//Pt/Rh-Al₂O₃)

### Pulver A: Ag-haltige Verbindung auf mikroporöser Trägersubstanz

Herstellung wie in Ausführungsbeispiel A

### Pulver B: Edelmetalle auf mikroporöser Trägersubstanz

Es wird ein kommerziell erhältliches Pulver, in dem Pt (1 ma-%) und Rh (0,5 ma-%) auf Al₂O₃ als mikroporöser Trägersubstanz enthalten sind, verwendet.

### Beschichtung eines geometrischen Trägers (keramischer Wabenkörper)

Zur Herstellung der Beschichtungslösung werden eine Mischung aus 37 g Pulver A und 13 g Pulver B als wäßrige Suspension in einer Planetenkugelmühle gemahlen und anschließend mit Wasser verdünnt. Anschließend wird, wie in Ausführungsbeispiel A beschrieben, verfahren, wobei die abschließende Temperaturbehandlung des beschichteten Trägers davon abweichend bei 500°C über 5 Stunden in Formiergas (5 Vol-% H2 in N2) erfolgt.

### Ausführungsbeispiel C: NOx-Speicher-Katalysator (NOx-Speicherkomponente Ag-Al₂O₃ und Dreiwegekatalysator)

### Pulver A: Ag-haltige Verbindung auf mikroporöser Trägersubstanz

Herstellung wie in Ausführungsbeispiel A.

### Pulver B: Katalysatorkomponente auf mikroporöser Trägersubstanz

Als Katalysatorkomponente wird ein kommerziell erhältlicher Dreiwegekatalysator in Pulverform verwendet.

### Beschichtung geometrischer Träger (keramische Wabenkörper)

Pulver A und B werden jeweils auf separaten keramischen Trägern beschichtet. Die Beschichtung erfolgt dabei wie in Ausführungsbeispiel A beschrieben, wobei jeweils 50 g Pulver eingesetzt werden.

Die abschließende Temperaturbehandlung des mit Pulver A beschichteten geometrischen Trägers erfolgt wie Ausführung A beschrieben, die des mit Pulver B beschichteten geometrischen Trägers bei 500°C über 5 Stunden im Formiergasstrom (5 Vol-% H2 in N2).

### Anordnung der geometrischen Träger

Die mit Pulver A (NOx-Speichermaterial) und mit Pulver B (Dreiwegekatalysator) beschichteten Träger werden seriell angeordnet. Dabei wird der mit Pulver A beschichtete Träger dem mit Pulver B beschichteten Träger vorgeschaltet.

Die Erfindung wird anhand von experimentellen Ergebnissen unter Bezugnahme auf Figuren näher erläutert. Sie zeigen:
- Fig. 1: λ-gesteuertes NOx-Speicher- und Freisetzungsverhalten von Ag-Al₂O₃ bei 350 °C - zyklischer Betrieb.
- Fig. 2: NOx-Speicherverhalten von Ag-Al₂O₃ bei 150°C, hergestellt mittels Tränk-Verfahren (□) oder Solgel-Verfahren (■).
- Fig. 3: Temperaturabhängiges NOx-Freisetzungsverhalten von Ag-Al₂O₃.
- Fig. 4: Einfluß von SO₂ auf die NOx-Beladungskapazität von Ag-Al₂O₃.
- Fig. 5: Einfluß hoher Temperaturen auf die NO-Beladungskapazität von Ag-Al₂O₃
- Fig. 6: λ-gesteuertes NOx-Speicher- und Freisetzungsverhalten von Ag-Al₂O₃//Pt/Rh-Al₂O₃ (Pulvermischung) bei 300°C - vollständige Beladung.
- Fig. 7: λ-gesteuertes NOx-Speicher- und Freisetzungsverhalten von Ag-Al₂O₃//Pt/Rh-Al₂O₃ (Pulvermischung) bei 300°C - zyklischer Betrieb.
- Fig. 8: NOx-Speicherverhalten von Ag-Al₂O₃//Pt/Rh-Al₂O₃ (Pulvermischung) bei 150°C.
- Fig. 9: λ-gesteuertes NOx-Speicher,- Freisetzungs- und NOx-Umsatzverhalten von Ag-Al₂O₃ und Dreiwegekatalysator (serielle Anordnung) bei 300 ⁰C - zyklischer Betrieb.

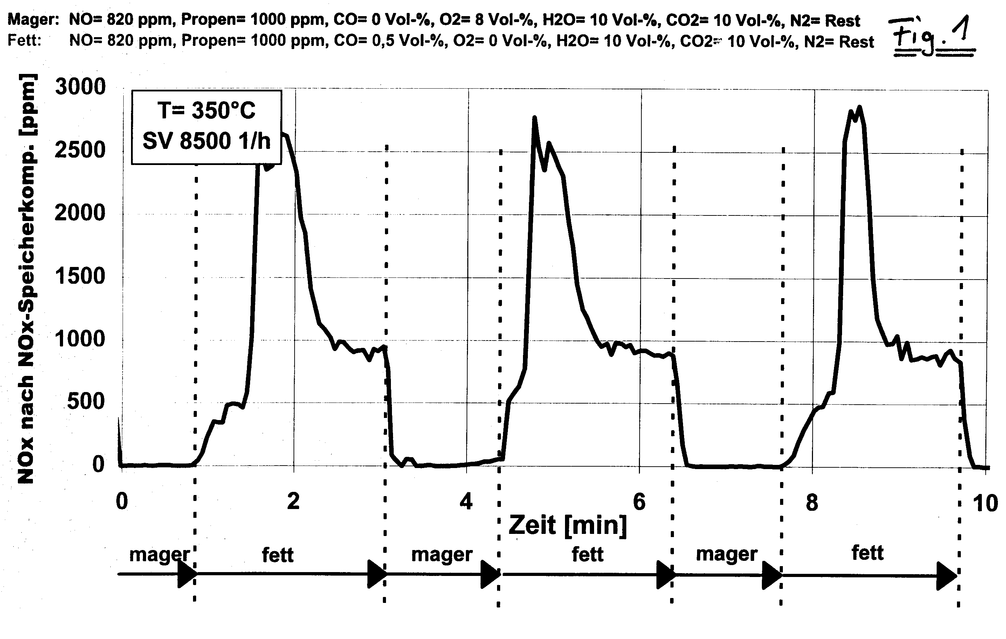

### Fig. 1 (λ-gesteuerte NOx-Speicherung und -Freisetzung - zyklischer Betrieb)

Die Wirkungsweise eines nach Ausführungsbeispiel A hergestellten NOx-speichernden Feststoffs wurde untersucht. In Fig. 1 ist der Verlauf der NOx-Konzentration (in ppm), die bei Änderung des λ-Wertes der Gasatmosphäre nach NOx-Speichermaterial gemessen wird, beispielhaft für eine Temperatur von 350°C gezeigt. Das Reaktionsgas hatte dabei im mageren und fetten Betrieb folgende Zusammensetzung:

| | mager (λ>1) | fett (λ>1) |
|---|---|---|
| NO | 820 ppm | 820 ppm |
| Propen | 1000 ppm | 1000 ppm |
| CO | 0 | 0,5 Vol-% |
| H₂O | 10 Vol-% | 10 Vol-% |
| O₂ | 8 Vol-% | 0 Vol-% |
| CO₂ | 10 Vol-% | 10 Vol-% |
| N₂ | Rest | Rest |
| Raumgeschwindigkeit | 8500 1/h | 85001/h |

Zum Zeitpunkt t=0 wurde der Versuch unter mageren (O₂-reichen) Bedingungen gestartet. In dieser Atmosphäre erfolgt die Speicherung der Stickoxide im Feststoff. Bei einer NOx-Eingangskonzentration von 820 ppm wird dabei nach NOx-Speichermaterial eine Konzentration von von Null gemessen. Nach darauffolgender Änderung der Gasatmosphäre zu fetten Bedingungen (t=ca. 50 s) erfolgt die Freisetzung der Stickoxide. Dadurch steigt die NOx-Konzentration nach NOx-Speichermaterial kurzzeitig auf bis zu 2600 ppm im Vergleich zu 820 ppm vor NOx-Speichermaterial an. Nach vollständiger Freisetzung der Stickoxide wird dann im Fettbetrieb nach NOx-Speichermaterial die gleiche NOx-Konzentration wie vor NOx-Speichermaterial (=820 ppm) beobachtet. Nach anschließendem Umschalten auf Magerbetrieb (t=ca. 3 min) erfolgt dann eine erneute Speicherung der Stickoxide. Dieser λ -Wechselbetrieb wurde mehrfach reproduzierbar wiederholt.

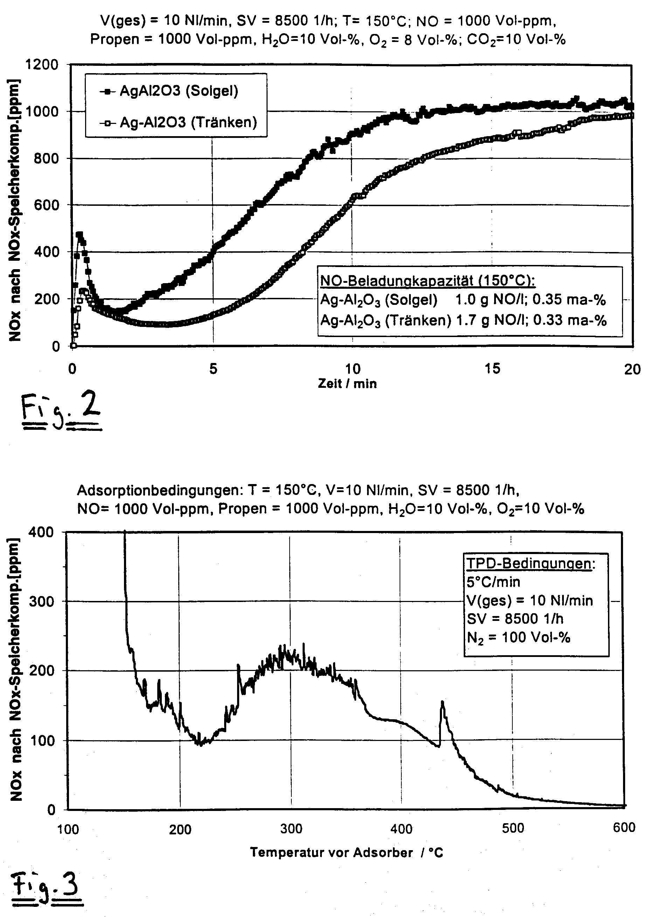

### Fig. 2 (Niedertemperatur-NOx-Speicherung)

In Fig. 2 ist das Freisetzungsverhalten von Ag-Al₂O₃ für NOx bei 150°C dargestellt. Dabei ist das Verhalten von zwei NOx-Speichermaterialien gezeigt, die über unterschiedliche Präparationsverfahren, nämlich Tränken (□) nach Ausführungsbeispiel A und Sol-Gel-Verfahren (■), hergestellt wurden.

Das Speicherverhalten beider NOx-Speichermaterialien ist ähnlich. Nach Start des Versuches wird zunächst eine gegenüber der NOx-Eingangskonzentration stark verminderte NOx-Konzentration am Ausgang des NOx-Speichermaterials festgestellt. Dieses ist auf die Speicherung des NOx am Ag-Al₂O₃ zurückzuführen. Mit zunehmender Betriebszeit und entsprechend zunehmender Beladung des NOx-Speichermaterials steigt die NOx-Konzentration nach NOx-Speichermaterial an, bis sie schließlich nach 12 Minuten beim Sol-Gel-präparierten bzw. nach 20 Minuten beim Tränk-präparierten NOx-Speichermaterial den Eingangswert erreicht. Das NOx-Speichermaterial hat in diesem Zustand seine volle NOx-Beladungskapazität erreicht. Im gezeigten Beispiel wird eine Beladungskapazität von 1,0 g NOx pro Liter Wabenkörpervolumen im Falle des Sol-Gel-präparierten bzw. 1,7 g NOx pro Liter Wabenkörper beim Tränk-präparierten NOx-Speichermaterial erreicht. Der Unterschied in der Beladungskapazität zwischen beiden Materialien ist auf die unterschiedlich hohe Menge aufgebrachten NOx-Speichermaterials auf dem Wabenkörper zurückzuführen. Vergleicht man die auf Masse NOx-Speichermaterial bezogene Beladung des NOx, so erreicht man in beiden Fällen ca. 0,35 ma-% Beladung.

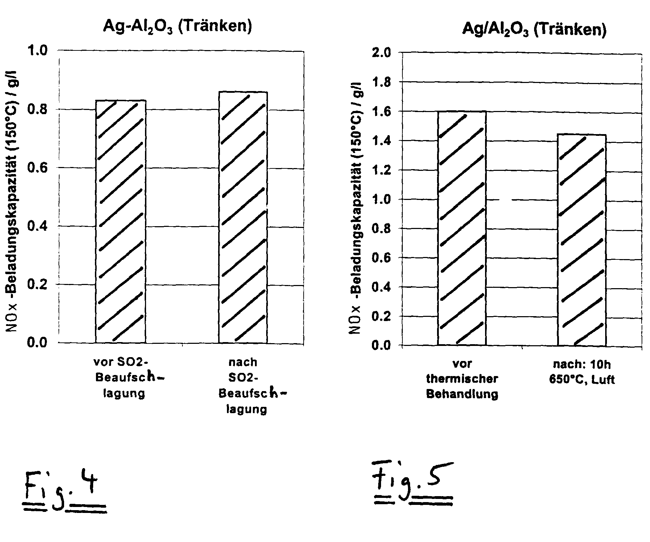

### Fig. 3 (NOx-Freisetzung)

Das NOx-Freisetzungsverhalten des nach Ausführungsbeispiel A hergestellten NOx-Speichermaterials ist in Fig. 3 gezeigt. Das beladene Ag-Al₂O₃-Speichermaterial wurde in dem dargestellten Fall nach der NOx-Speicherung bei 150°C mit einer Temperaturrampe von 5°C/min in Stickstoff aufgeheizt und die NOx-Konzentration nach NOx-Speichermaterial analytisch online verfolgt. Es ist zu erkennen, daß die Freisetzung des überwiegenden Teils der freigesetzten Stickoxide im Temperaturbereich zwischen 230°C und 450°C (vor NOx-Speichermaterial) erfolgt.

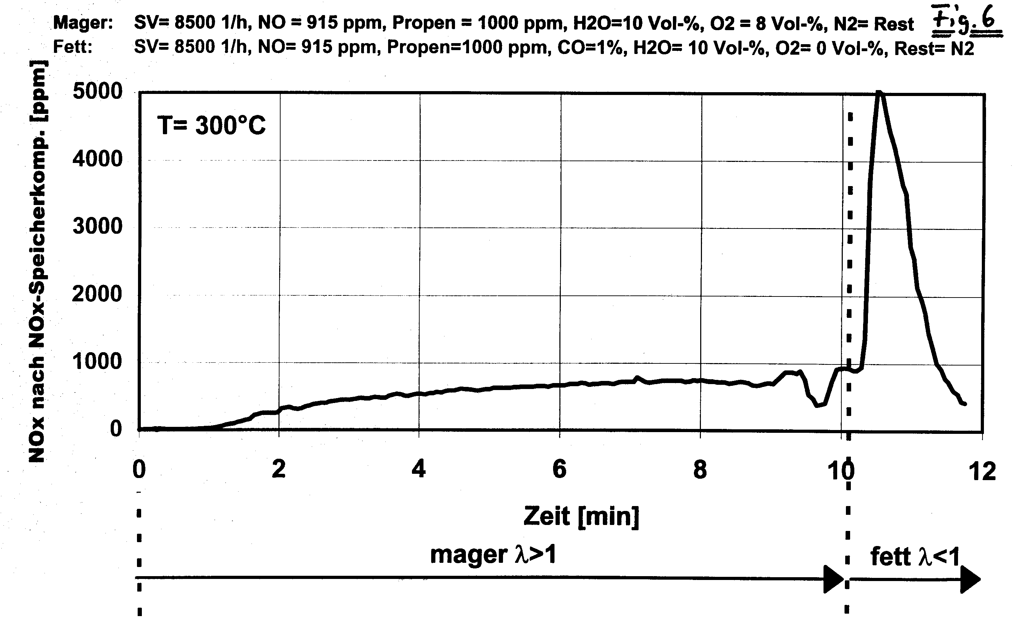

### Fig. 4 (SO₂-Resistenz)

Die Resistenz des nach Ausführungsbeispiel A hergestellten Ag-Al₂O₃-Speichermaterials gegen SO₂ ist in Fig. 4 gezeigt. Nach einer Beaufschlagung des Materials mit 50 Vol-ppm SO₂ über 2 Stunden bei 450°C mit 10 Vol-% O₂, 10 Vol-% H₂O in N₂ bleibt die NOx-Speicherkapazität gegenüber dem Neuzustand erhalten.

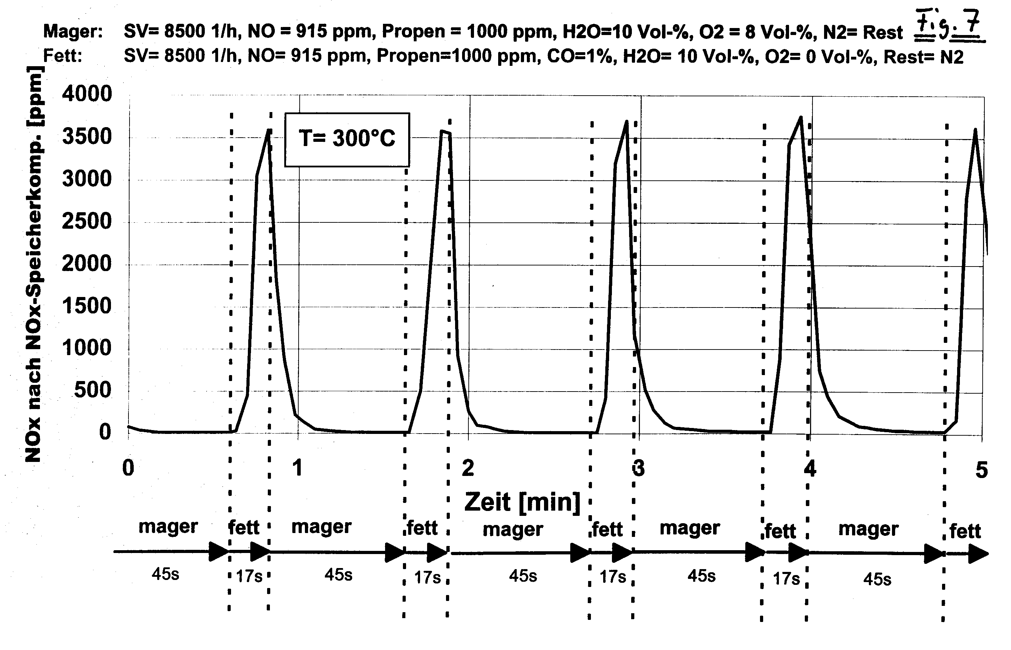

### Fig. 5 (Thermische Beständigkeit)

Die thermische Beständigkeit des NOx-Speichermaterials (hergestellt gemäß Ausführungsbeispiel A) ist in Fig. 5 gezeigt. Nach 10 Stunden bei 650°C unter Luft wird nur eine geringe Abnahme der Beladungskapazität gegenüber dem Neuzustand von weniger als 10 % festgestellt.

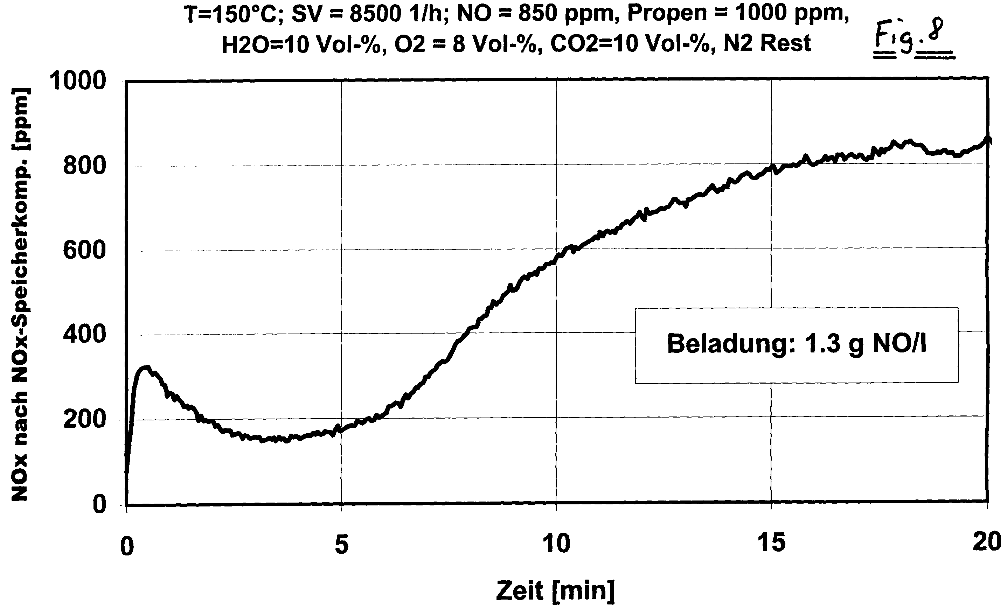

### Fig. 6 (λ-gesteuerte NOx-Speicherung und -Freisetzung)

Die Wirkungsweise eines nach Ausführungsbeispiel B hergestellten NOx-speichernden Feststoffs wurde untersucht. In Fig. 6 ist der Verlauf der NOx-Konzentration (in ppm), die bei Änderung des λ-Wertes der Gasatmosphäre nach NOx-Speichermaterial gemessen wird, beispielhaft für eine Temperatur von 300°C gezeigt. Das Reaktionsgas hatte dabei im mageren und fetten Betrieb folgende Zusammensetzung:

| | mager (λ>1) | fett (λ>1) |
|---|---|---|
| NO | 915 ppm | 915 ppm |
| Propen | 1000 ppm | 1000 ppm |
| CO | 0 | 1 Vol-% |
| H₂O | 10 Vol-% | 10 Vol-% |
| O₂ | 8 Vol-% | 0 Vol-% |
| N₂ | Rest | Rest |
| Raumgeschwindigkeit | 8500 1/h | 8500 1/h |

Zum Zeitpunkt t=0 wurde der Versuch unter mageren (O₂-reichen) Bedingungen gestartet. In dieser Atmosphäre erfolgt die Speicherung der Stickoxide im Feststoff. Bei einer NOx-Eingangskonzentration von 915 ppm wird dabei während der ersten Minute nach NOx-Speichermaterial eine NOx-Konzentration von Null gemessen. Danach erfolgt ein langsamer Anstieg der NOx-Konzentration, der die zunehmende Beladung des NOx-Speichermaterials signalisiert. Nach einer Betriebszeit von ca. 10 min entspricht die NOx-Konzentration nach NOx-Speichermaterial der vor NOx-Speichermaterial. In diesem Zustand ist das NOx-Speichermaterial voll beladen. Nach darauffolgender Änderung der Gasatmosphäre zu fetten Bedingungen erfolgt die schlagartige Freisetzung der Stickoxide. Die im Magerbetrieb gespeicherte Menge an Stickoxiden, die etwa 0,8 g NOx pro Liter Wabenkörpervolumen beträgt, entspricht dabei in etwa der unter fetten Bedingungen freigesetzten Menge.

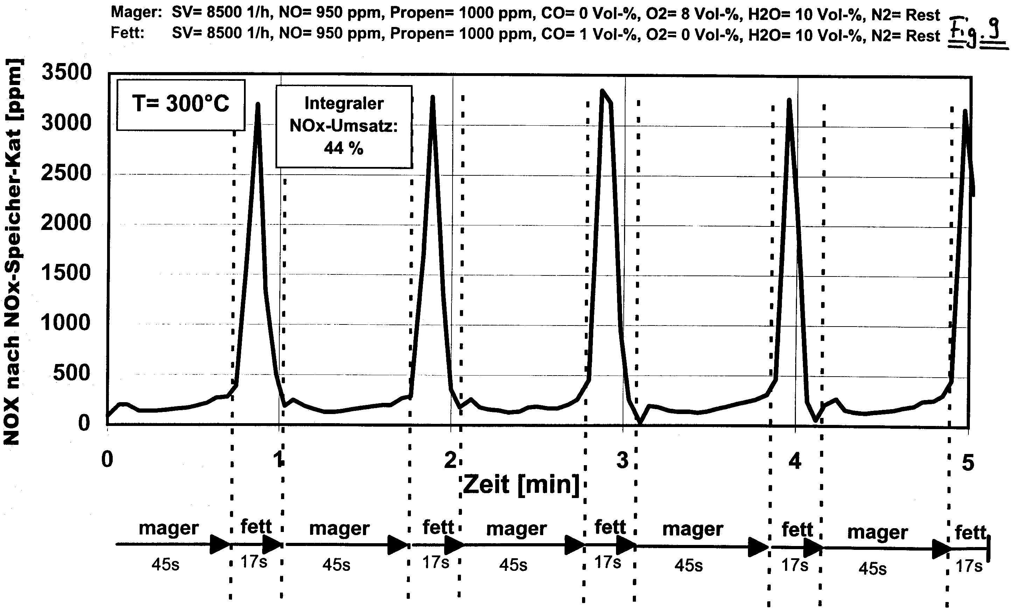

### Fig. 7 (λ-gesteuerte NOx-Speicherung und -Freisetzung - zyklischer Betrieb)

Das NOx-Speichermaterial gemäß Ausführungsbeispiel B wurde in einer weiteren Messung alternierend in magerer und fetter Atmosphäre betrieben. Die Zusammensetzung von magerer und fetter Atmosphäre ist dieselbe wie bei Fig. 6. Dabei wurde die Dauer der Magerphase, in der die NOx-Speicherung erfolgt, auf 45 s beschränkt, um einen NOx-Durchbruch zu vermeiden. Die Dauer der Fettphase betrug 17 s. Diese Zeit wird unter den experimentell vorliegenden Bedingungen in etwa zur vollständigen Freisetzung der Stickoxide benötigt. Der Verlauf der NOx-Konzentration (in ppm) nach NOx-Speichermaterial unter zyklischen Bedingungen ist in der Fig. 7 dargestellt. Es ist jeweils die Speicherung der Stickoxide im Magerbetrieb (NOx-Konzentration < 20 ppm) und die entsprechende Freisetzung im Fettbetrieb zu erkennen. Dieser Wechsel der Gasatmosphäre wurde über mehrere Zyklen wiederholt und ein reproduzierbares Speicher- und Freisetzungsverhalten festgestellt. Die im Magerbetrieb gespeicherte Menge an Stickoxiden entspricht dabei in etwa der unter fetten Bedingungen freigesetzten Menge.

Das Speicher- und Freisetzungsverhalten des Feststoffs wurde ebenfalls bei 350°C und 400°C untersucht. Dabei wurde das gleiche Verhalten, wie es zuvor für eine Temperatur von 300°C beschrieben wurde, festgestellt.

### Fig. 8 (Niedertemperatur-NOx-Speicherung)

Das Niedertemperatur-Speicherverhalten des nach Ausführungsbeispiel B hergestellten Feststoffs ist in Fig. 8 für eine Temperatur von 150 °C gezeigt. Die Zusammensetzung des Reaktionsgases ist am oberen Rand des Diagramms angegeben. Nach Start des Versuches wird zunächst eine gegenüber der NOx-Eingangskonzentration stark verminderte NOx-Konzentration am Ausgang des NOx-Speichermaterials festgestellt. Dieses ist auf die Speicherung der Stickoxide im Feststoff zurückzuführen. Mit zunehmender Betriebszeit und entsprechend zunehmender Beladung des NOx-Speichermaterials steigt die NOx-Konzentration nach NOx-Speichermaterial an bis sie schließlich nach 20 Minuten den Eingangswert erreicht. Der NOx-Speichermaterial hat in diesem Zustand seine volle NOx-Beladungskapazität erreicht. Im gezeigten Beispiel wird eine Beladungskapazität von 1,3 g NOx pro Liter Wabenkörper erreicht.

### Fig. 9 (λ-gesteuerte NOx-Speicherung, -Freisetzung und -Umsetzung)

Die Funktionsweise des NOx-Speicherkatalysators nach Ausführungsbeispiel C ist in Fig. 9 dargestellt. Die in serieller Anordnung befindlichen Komponenten NOx-Speicherkomponente und Dreiwegekatalysator wurden unter wechselndem λ der Gasatmosphäre betrieben. Dabei betrug die Dauer der Magerphase, in der die NOx-Speicherung erfolgt, 45 s, die der Fettphase, in der die NOx-Freisetzung und -Umsetzung erfolgt, 17 s. In der Magerphase ist die NOx-Speicherung an der gegenüber dem Eingangswert (950 ppm) niedrigeren NOx-Ausgangskonzentration zu erkennen. In der Fettphase erfolgt die Freisetzung und teilweise Umsetzung der Stickoxide. Bestimmt man den integralen NOx-Umsatz über die gesamte Versuchsdauer als Differenz der gesamten zugespeisten NOx-Menge zu der gesamten nach Katalysator austretenden NOx-Menge bezogen auf die gesamte zugespeiste NOx-Menge, so ergibt sich ein Wert von 44 %.

Würde man im Vergleich dazu den Dreiwegekatalysator alleine und unter identischen Betriebsbedingungen betreiben, so ist in der Magerphase kein NOx-Umsatz, in der fetten Phase hingegen ein NOx-Umsatz von nahezu 100 % zu erwarten. Bei dem eingestellten Taktverhältnis von Mager- zu Fettphase (45 s zu 17 s) wäre somit ein integraler NOx-Umsatz von ca. 27 % zu erwarten. Durch die beschriebene serielle Anordnung von erfindungsgemäßen NOx-Speichermaterial und Dreiwegekatalysator ist somit ein zusätzlicher NOx-Umsatz von 17 % gegenüber dem konventionellen Dreiwegekatalysator erzielbar.

### In der Anmeldung zitierte Literatur zum Stand der Technik:

/1/ Shin'ichi Matsumoto, Catal. Today, 29 (1996) 43/1/
/2/ W. Boegner, M. Kraemer, B. Krutzsch, S. Pischinger, D. Voigtländer, G. Wenninger, F. Wirbeleit, M.S. Brogan, R.J. Brisley et al., Appl. Catal., B7 (1995) Nr. 1-2, S. 153-171.
/3/ W. Zhang, H. Yahiro, N. Mizuno, J. Izumi and M. Iwamoto, Langmuir, 9 (1993) 2337
/4/ W. Zhang, H. Yahiro, N. Mizuno, M. Iwamoto and J. Izumi, J. Mater. Sci. Lett 12 (1993) Nr. 15, 1197

## Patentansprüche

1. Verwendung eines Ag-haltigen Feststoffs zur Speicherung/Freisetzung von Stickoxiden in Gasen, wobei die Stickoxide bei λ-Werten des Gases > 1 in dem Ag-haltigen Feststoff gespeichert werden und die Stickoxide bei λ-Werten des Gases ≤ 1 an dem Ag-haltigen Feststoff freigesetzt werden.

2. Verwendung nach Anspruch 1, **dadurch gekennzeichnet**, daß der Ag-haltige Feststoff elementares Ag oder Ag₂O oder Ag₂CO₃ oder AgOH oder ein Gemisch aus mehreren dieser Verbindungen enthält.

3. Verwendung nach Anspruch 1 oder 2, **dadurch gekennzeichnet**, daß der Ag-haltige Feststoff ein Edelmetall, z.B. Pt, Pd, Rh, Ir, Au, Ru, oder Os oder ein Gemisch aus mehrere Edelmetallen enthält.

4. Verwendung nach einem der vorangehenden Ansprüche, **dadurch gekennzeichnet**, daß die Ag-haltigen Verbindungen und/oder die Edelmetallverbindungen auf mikroporösen Trägersubstanzen aufgebracht werden, z.B. Al₂O_{3,} CeO₂, La-haltiges CeO₂, ZrO₂, La-haltiges ZrO₂, SiO₂,TiO₂, Mg-Al-Mischoxid, Si-Al-Mischoxid, Zeolithe oder ein Gemisch aus mehreren dieser Verbindungen.

5. Verwendung nach einem der vorangehenden Ansprüche, **dadurch gekennzeichnet**, daß die Speicherung der Stickoxide bei einer Temperatur unter 200°C erfolgt, und die Freisetzung der Stickoxide bei einer Temperatur über 200°C erfolgt.

6. Verwendung nach einem der vorangehenden Ansprüche, **dadurch gekennzeichnet**, daß das stickoxidhaltige Gas das Abgas eines Dieselmotors oder eines mager betriebenen Ottomotors ist.

7. Stickoxid-Speicherkatalysator zur Entstickung magerottomotorischer oder dieselmotorischer Abgase, mit
- einer Stickoxid-Speicherkomponente, mit der im Magerbetrieb des Motors Stickoxide gespeichert werden können, und im fetten oder stöchiometrischen Betrieb des Motors die Stickoxide freigesetzt werden können,
- einer Katalysatorkomponente, mit der die freigesetzten Stickoxide katalytisch zu Stickstoff umgesetzt werden können,
**dadurch gekennzeichnet**, daß die Stickoxid-Speicherkomponente einen Ag-haltigen Feststoff enthält.

8. Stickoxid-Speicherkatalysator nach Anspruch 7, **dadurch gekennzeichnet**, daß der Ag-haltige Feststoff elementares Ag oder Ag₂O oder Ag₂CO₃ oder AgOH oder ein Gemisch aus mehreren dieser Verbindungen enthält.

9. Stickoxid-Speicherkatalysator nach Anspruch 7 oder 8, **dadurch gekennzeichnet**, daß der Ag-haltige Feststoff ein Edelmetall, z.B. Pt, Pd, Rh, Ir, Au, Ru, oder Os oder ein Gemisch aus mehreren Edelmetallen enthält.

10. Stickoxid-Speicherkatalysator nach einem der Ansprüche 7 bis 9, **dadurch gekennzeichnet**, daß die Speicherung der Stickoxide bei einer Temperatur unter 200°C erfolgen kann, und die Freisetzung der Stickoxide bei einer Temperatur über 200°C erfolgen kann.

11. Stickoxid-Speicherkatalysator nach einem der Ansprüche 7 bis 10, **dadurch gekennzeichnet**, daß die Katalysatorkomponente eine Dreiwegefunktion aufweist.

12. Stickoxid-Speicherkatalysator nach einem der Ansprüche 7 bis 11, **dadurch gekennzeichnet**, daß die Katalysatorkomponente Pt, Pd, Rh oder Ir oder ein Gemisch aus mehreren dieser Elemente enthält.

13. Stickoxid-Speicherkatalysator nach einem der Ansprüche 7 bis 12, **dadurch gekennzeichnet**, daß die Stickoxid-Speicherkomponente und/oder die Katalysatorkomponente auf mikroporösen Trägersubstanzen aufgebracht sind, z.B. Al₂O_{3,} CeO₂, La-haltiges CeO₂, ZrO₂, La-haltiges ZrO₂, SiO₂ TiO₂, Mg-Al-Mischoxid, Si-Al-Mischoxid, Zeolithe oder ein Gemisch aus mehreren dieser Verbindungen.

14. Stickoxid-Speicherkatalysator nach einem der Ansprüche 7 bis 13, **dadurch gekennzeichnet**, daß die auf einer mikroporösen Trägersubstanz vorliegende Stickoxid-Speicherkomponente als Pellet oder Extrudat ausgebildet ist oder auf einem geometrischen Träger aufgebracht ist.

15. Stickoxid-Speicherkatalysator nach einem der Ansprüche 7 bis 14, **dadurch gekennzeichnet**, daß Stickoxid-Speicherkomponenten und Katalysatorkomponenten als atomare Mischung auf einer mikroporösen Trägersubstanz vorliegen.

16. Stickoxid-Speicherkatalysator nach einem der Ansprüche 7 bis 15, **dadurch gekennzeichnet**, daß Stickoxid-Speicherkomponenten und Katalysatorkomponenten jeweils einzeln auf gleichen oder unterschiedlichen mikroporösen Trägersubstanzen vorliegen.

17. Stickoxid-Speicherkatalysator Anspruch 16, **dadurch gekennzeichnet**, daß die jeweils einzeln auf gleichen oder unterschiedlichen mikroporösen Trägersubstanzen befindlichen Stickoxid-Speicherkomponenten und Katalysatorkomponenten als Pulvermischung auf einem geometrischen Träger aufgebracht sind.

18. Stickoxid-Speicherkatalysator nach Anspruch 17, **dadurch gekennzeichnet**, daß die jeweils einzeln auf gleichen oder unterschiedlichen Trägersubstanzen befindlichen Stickoxid-Speicherkomponenten und Katalysatorkomponenten jeweils in Schichten angeordnet auf einem geometrischen Träger aufgebracht sind.

19. Stickoxid-Speicherkatalysator nach Anspruch 17, **dadurch gekennzeichnet**, daß Stickoxid-Speicherkomponenten und Katalysatorkomponenten getrennt voneinander auf verschiedenen, z.B. seriell angeordneten geometrischen Trägern vorliegen.
